Europäisches Patentamt

European Patent Office

Office européen des brevets

(11) Veröffentlichungsnummer: **0 421 206 A1**

# (12) EUROPÄISCHE PATENTANMELDUNG

(21) Anmeldenummer: 90118159.4

(22) Anmeldetag: 21.09.90

(51) Int. Cl.5: **B63B 25/28**, F16G 11/12

(30) Priorität: 04.10.89 DE 3933131

(43) Veröffentlichungstag der Anmeldung:
10.04.91 Patentblatt 91/15

(84) Benannte Vertragsstaaten:
AT BE CH DE DK ES FR GB GR IT LI LU NL SE

(71) Anmelder: MEC MARINE EQUIPMENT +
CONSULTING BEHR & HORSTMANN GMBH
Witternstrasse 2
W-2102 Hamburg 93(DE)

(72) Erfinder: **Behr, Peter**
Stubbenweg 7a
W-2000 Hamburg 65(DE)
Erfinder: **Horstmann, Matthias**
Simrockstrasse 151
W-2000 Hamburg 55(DE)

(74) Vertreter: **Niedmers, Ole, Dipl.-Phys. et al**
Patentanwälte Niedmers & Schöning
Jessenstrasse 4
W-2000 Hamburg 50(DE)

(54) Vorrichtung zum Sichern von Transportgütern auf Transportfahrzeugen.

(57) Es wird eine Vorrichtung (10) zum Sichern von Transportbehältern (11) auf Transportfahrzeugen, insbesondere Schiffen, vorgeschlagen, umfassend eine Verbindungseinrichtung (13), deren erstes Ende (130) mit dem Transportbehälter (12) verbindbar ist, und eine Spanneinrichtung (14), deren mit einer Gewindespindel (142) längenverstellbares erstes Ende (140) mit dem Transportfahrzeug (12) verbindbar ist, wobei das zweite Ende (131) der Verbindungseinrichtung (13) eine Mehrzahl von Verankerungsverdikkugnen (132) aufweist, über die das zweite Ende der Spanneinrichtung (14) mit der Verbindungseinrichtung (13) wahlweise in geeignet gewähltem Abstandsraster verbindbar ist. Die Spanneinrichtung (14) weist einen Schlittenkörper (16) zur Aufnahme der Verankerungsverdickungen (132) auf und ist im wesentlichen in axialer (143) Richtung der Spanneinrichtung (14) frei bewegbar.

Fig. 1    Fig. 3

# VORRICHTUNG ZUM SICHERN VON TRANSPORTBEHÄLTERN AUF TRANSPORTFAHRZEUGEN

Die Erfindung betrifft eine Vorrichtung zum Sichern von Transportbehältern auf Transportfahrzeugen, insbesondere Schiffen, umfassend eine Verbindungseinrichtung, deren erstes Ende mit dem Transportbehälter verbindbar ist und eine Spanneinrichtung, deren mit einer Gewindespindel längenverstellbares erstes Ende mit dem Transportfahrzeug verbindbar ist, wobei das zweite Ende der Verbindungseinrichtung eine Mehrzahl von Verankerungsverdickungen aufweist, über die das zweite Ende der Spanneinrichtung mit der Verbindungseinrichtung wahlweise in geeignet gewähltem Abstandsraster verbindbar ist.

Eine Vorrichtung dieser Art ist bekannt (DE-Gbm 88 07 164). Auf Transportfahrzeugen wie seegehenden Schiffen werden an Deck Transportbehälter, im folgenden Container genannt, über- und nebeneinander gestapelt und einerseits miteinander und andererseits mit dem Deck des Schiffes kraftschlüssig zu deren Sicherung vor Verrutschen verbunden. Frühere Verbindungen, mit denen derartige Sicherungen der Container an Deck eines Schiffes ausgeführt wurden, bestanden aus seil- oder stangenförmigen Verbindungseinrichtungen, deren eines Ende am Eckbeschlag eines Containers verankert wurde und deren anderes Ende über gewöhnliche, längenverstellbare Spannschrauben mit dem Deck des Schiffes über dort angebrachte Befestigungsmittel wie Augen oder dgl. verbunden wurden.

Es hat sich gezeigt, daß beim Stauen und Sichern der Container mit den vorangehend beschriebenen Mitteln einerseits verhältnismäßig viel Zeit vergeht, da die Längendifferenzen zwischen der Befestigungsöffnung im Container und der Decksbefestigung durch Drehen der Spindel zur Änderung der Länge der Vorrichtung überwunden werden müssen und andererseits deshalb, um derartige Stauvorgänge zeitlich überhaupt in einem tragbaren Rahmen zu halten, von mehreren Personen gleichzeitig durchgeführt werden mußten.

Bei der oben erwähnten bekannten Vorrichtung ist versucht worden, diesem Problem dadurch Herr zu werden, daß die Verbindungseinrichtung eine Mehrzahl von geeignet voneinander beabstandeter Verankerungsverdickungen aufweist, die in einer Art Grobeinstellung entsprechend der zu überwindenden Distanz zwischen der Befestigungsöffnung im Container und der Decksbefestigung ausgewählt werden und hinter einen Vorsprung, der den Abschluß der bekannten Spanneinrichtung an dem der Gewindespindel gegenüberliegenden Ende bildet, hintergehakt wird. Die Gewindespindel selbst ist bei der bekannten Spanneinrichtung in einem Kulissenstein geführt, der ein mit einem Innengewinde versehenes Durchgangsloch aufweist, in dem die Gewindespindel drehbar aufgenommen wird. Der als Spindelmutter ausgebildete Kulissenstein ist dabei zur Feineinstellung der Spanneinrichtung mittels der damit zusammenwirkenden Gewindespindel relativ zur Längsachse der Spanneinrichtung verschiebbar. Der Vorsprung zur Aufnahme der Verankerungsverdickung kann somit frei in Richtung der Verbindungseinrichtung, die an die Spanneinrichtung gekoppelt werden soll, verschoben werden, bis die zur Grobeinstellung ausgewählte Verankerungsverdickung soweit hinter dem Vorsprung der Spanneinrichtung liegt, daß dieser ergriffen und durch eine die Vorrichtung insgesamt axial verlängernde Bewegung hinter dem Vorsprung einrastet und dort gehalten wird. Nachfolgend erfolgt dann die endgültige Sicherung der Verbindung durch Drehen der Gewindespindel der Spanneinrichtung, bis der Kulissenstein der Spanneinrichtung am von der Verbindungseinrichtung abgewandten Ende der Spanneinrichtung anliegt und durch weiteres Drehen der Gewindespindel die endgültige axiale Länge durch Verkürzen der Vorrichtung insgesamt eingestellt wird.

Nachteilig bei der bekannten Vorrichtung ist, daß zum Ergreifen der Verankerungsverdickungen der Verbindungseinrichtung die gesamte Spanneinrichtung angehoben werden muß, um für die Grobeinstellung der Verbindungslänge der Vorrichtung die Spanneinrichtung auf die ausgewählte Verankerungsverdickung aufzuschieben. Es ist verständlich, daß dieses für die mit dem Verzurren und Sichern der Container verantwortlichen Personen mit großer Kraftanstrengung verbunden ist, da allein schon die Spanneinrichtungen ein beträchtliches Gewicht aufweisen, wobei noch hinzu kommt, daß durch das Anheben der gesamten Spanneinrichtung erhebliche Verletzungsrisiken infolge eines möglichen Ausderhandrutschens entstehen. Ein weiterer erheblicher Nachteil der bekannten Vorrichtung besteht darin, daß der längsverschiebliche, als Gewindemutter ausgebildete Kulissenstein sehr präzise in geeigneten Führungen in der Spanneinrichtung laufen muß, damit das Gewinde der Gewindespindelmutter fortwährend axial zur Spanneinrichtung ausgerichtet ist. Auch derartige Führungen erfordern in bezug auf die Herstellung der Spanneinrichtung einen erhöhten konstruktiven und fertigungstechnischen Aufwand, so daß sich die Spanneinrichtung der bekannten Vorrichtung nur verhältnismäßig aufwendig und damit kostenträchtig herstellen läßt.

Es ist somit Aufgabe der Erfindung, eine Vorrichtung zu schaffen, die sich gegenüber der bekannten Vorrichtung leichter und mit geringerem Verletzungsrisiko handhaben läßt, so daß auch Personal beim Stauvorgang von Transportbehältern mittels der Vorrichtung eingespart werden kann, und die sich insgesamt kostengünstig herstellen läßt.

Gelöst wird die Aufgabe gemäß der Erfindung, dadurch, daß die Spanneinrichtung einen Schlittenkörper zur Aufnahme der Verankerungsverdickung aufweist, der im wesentlichen in axialer Richtung zur Spanneinrichtung frei bewegbar ist.

Der Vorteil der erfindungsgemäßen Vorrichtung liegt im wesentlichen darin, daß ohne jegliche Kraftanstrengung der Schlittenkörper innerhalb der Spanneinrichtung hin und her geschoben werden kann, und zwar in eine Position, die der der betreffenden, geeignet ausgewählten Verankerungsverdickung der Verbindungseinrichtung entspricht, und dann vom Schlittenkörper erfaßt und an ihm arretiert wird.

Grundsätzlich gibt es verschiedene geeignete Möglichkeiten zur lösbaren Aufnahme der Verankerungsverdickungen im Schlittenkörper. Es hat sich jedoch als vorteilhaft herausgestellt, daß der Schlittenkörper wenigstens einen klauenartig ausgebildeten Steg zum Eintritt und zur Aufnahme der Verbindungsverdickung aufweist, wobei der klauenartig ausgebildete Steg den Vorteil hat, daß dieser eine sehr wirksame und einfache Art der Ausbildung einer Befestigungseinrichtung darstellt.

Gemäß einer vorteilhaften Ausgestaltung der Vorrichtung weist der Steg ein radial offenes Durchgangsloch zum Eintritt und zur Aufnahme der Verbindungseinrichtung auf, wodurch es möglich ist, daß die Verbindungseinrichtung mit ihrem zwischen zwei Verankerungsverdickungen, die voneinander beabstandet sind, ausgebildeten Körperteil durch die radiale Öffnung des Steges gesteckt werden und dann lediglich in Spannrichtung axial zum Durchgangsloch gezogen zu werden braucht, so daß sich die Verankerungsverdickungen am Lochrand des Durchgangsloches, bzw. am Steg anschmiegen können.

Um im Bereich des Durchgangsloches des Steges die Ergreif- bzw. Arretiersicherheit zu erhöhen, weist das Durchgangsloch des ersten Steges vorteilhafterweise an seiner zur Gewindespindel abgewandten Seite ein zu seiner Lochachse im wesentlichen axiales Senkloch auf, das beispielsweise ein zylindrisch ausgebildetes Senkloch sein kann, so daß im belasteten Zustand der Vorrichtung die Verankerungsverdickung wenigstens teilweise im axialen Senkloch zu liegen kommt.

Grundsätzlich reicht es zur bestimmungsgemäßen Funktion der Vorrichtung, daß der Schlittenkörper lediglich einen Steg zum Eintritt und zur Aufnahme der Verankerungsverdickung bzw. zur Aufnahme der Verbindungseinrichtung im allgemeinen aufweist. Es hat sich jedoch als sehr vorteilhaft herausgestellt, daß der Schlittenkörper zwei voneinander beabstandete Stege aufweist, die über ein Abstandselement miteinander verbunden sind. Grundsätzlich gilt, daß die Stege gleich ausgebildete radial offene Durchgangslöcher aufweisen, wobei es aber völlig ausreicht, daß lediglich das Durchgangsloch des ersten Steges, wie oben erwähnt, an seiner zur Gewindespindel abgewandten Seite ein axiales Senkloch aufweist, während der zweite Steg, der zur Gewindespindel hin gerichtet ist, lediglich ein radial offenes Durchgangsloch ohne Senkung aufzuweisen braucht. Dieser zweite Steg weist aber im Durchmesser ein so großes Durchgangsloch auf, daß die Verankerungsverdickung mit ihrem zylindrischen Teil axial voll beweglich hindurch paßt, so daß sich die Verbindungseinrichtung beim Arretiervorgang über ihre Verankerungsverdickung lediglich mit einer Verankerungsverdickung axial auf dem Boden des Senkloches bei Belastung der Vorrichtung in axialer Richtung abstützen kann, während bei aufgenommenen Verankerungsverbindungen in dem Durchgangsloch des jeweiligen Steges auch eine radiale Abstützung durch den jeweiligen Steg erfolgt, d. h. die radial offenen Durchgangslöcher erlauben keinen Austritt der Verankerungsverdickungen aus den sie aufnehmenden Durchgangslöchern, wenn sie axial in diese eingeführt worden sind.

Das beide Stege des Schlittenkörpers miteinander verbindende Abstandselement kann grundsätzlich beliebig geeignet ausgebildet sein, d. h. es können beispielsweise dafür Stege oder Stangen vorgesehen werden, die lediglich die Aufgabe haben, die beiden Stege des Schlittenkörpers auf geeignet vorgewähltem Abstand zu halten. Vorteilhafterweise ist das Abstandselement jedoch im Querschnitt im wesentlichen U-förmig ausgebildet, wobei das Abstandselement grundsätzlich aus einem Rohr mit einem kreisförmigen Querschnitt bestehen kann, bei dem das obere Rohrteil entfernt worden ist.

Grundsätzlich gilt, daß der Schlittenkörper auf beliebig geeignet ausgebildeten Führungen in der Spanneinrichtung geführt werden kann. Um jedoch im Rahmen der erfindungsgemäß angestrebten Bereitstellbarkeit der Vorrichtung zu niedrigen Kosten zu bleiben, weist der Steg vorteilhafterweise im wesentlichen parallel zur Durchgangslochachse und im wesentlichen in der gleichen Achsebene zwei gegenüberliegende Führungsöffnungen auf, die in entsprechend ausgebildeten Führungen in der Spanneinrichtung axial bewegbar sind.

Zur Schaffung von Führungseinrichtungen für den Schlittenkörper bzw. die dafür vorgesehenen Öffnungen in den Stegen wird die Spanneinrichtung vorteilhafterweise durch zwei im wesentlichen parallele Stangen gebildet, die an ihren ersten und zweiten Enden mit jeweils einem ersten bzw. einem zweiten Abschlußelement versehen sind. Die Abschlußelemente sind mit den beiden parallelen Stangen vorteilhafterweise über Schweißverbindungen miteinander verbunden, die Abschlußelemente können aber auch derart ausgebildet sein, daß die Stangen an ihren Enden mit Gewindeansätzen versehen sind, die in entsprechende in den Abschlußelementen vorgesehene Gewindelöcher eingreifen.

Bei einer weiteren vorteilhaften Ausgestaltung der Vorrichtung weist das zur Verankerungsverdikkung hin gerichtete zweite Abschlußelement ein radial offenes Durchgangsloch zum Durchtritt der Verbindungseinrichtung auf, während das zum Transportfahrzeug hin gerichtete erste Abschlußelement vorteilhafterweise ein mit einem Gewinde versehenes Durchgangsloch zur Aufnahme der Gewindespindel aufweist.

Das radial offene Durchgangsloch des zweiten Abschlußelements gestattet somit den ungestörten axialen Durchtritt auch der Verankerungsverdickungen, wenn die Verankerungsverdickungen in den Durchgangslöchern der Stege bzw. in dem Senkloch des einen Steges aufgenommen ist, so daß eine ungestörte Bewegung des Schlittenkörpers mit darin aufzunehmenden Verankerungsverdickungen bzw. der Verbindungseinrichtung als solcher möglich ist.

Für diese ungestörte Bewegbarkeit des Schlittenkörpers ist es vorteilhaft, daß die Achsen der Durchgangslöcher der Abschlußelemente, die im wesentlichen die Achse der Spanneinrichtung bilden, mit den Durchgangsachsen der Stege fluchten. Gleiches gilt natürlich auch für die Achse der Gewindespindel, so daß die Vorrichtung insgesamt bei der Ausführung des Spannvorganges sich nicht verkantet und daher mit allen ihren Bewegungselementen leicht betätigbar ist.

Die die Spanneinrichtung bildenden Stangen können je nach Anforderung beliebig geeignet lang ausgebildet sein, so daß bei einem geringen Vorrat an Spanneinrichtungen unterschiedlicher Stangenlänge Distanzkörper oder Einrichtungen zur Überwindung von Abständen zwischen der Ecke eines Containers und der Befestigung an Deck eines Schiffes, unabhängig von der unterschiedlich längeneinstellbaren Ausbildung der Verbindungseinrichtung selbst entbehrlich sind. Sind die Stangen der Spanneinrichtung verhältnismäßig lang ausgebildet, kann es vorteilhaft sein, zwischen dem ersten und dem zweiten Abschlußelement wenigstens ein Zwischenelement anzubringen, über das die beiden Stangen durch eine Schweißverbindung oder eine beliebige andere geeignete Verbindung verbunden sind, so daß sich die Stabilität der Spanneinrichtung vergrößert und die ungehinderte Verschiebbarkeit des Schlittenkörpers gewährleistet ist.

Die Verbindungseinrichtung, die auch eine Befestigungseinrichtung zur Befestigung in den Eckbeschlägen eines Containers aufweist, kann ansonsten beliebig geeignet ausgebildet sein, d. h. sie kann aus einem flexiblen Seil, einem massiven stangenförmigen Teil oder auch aus einer Kombination eines Seils mit einer Stange realisiert werden. Auch ist die Verwendung einer Kette für das distanzüberwindende Teil der Verbindungseinrichtung möglich, ggf. in Verbindung mit einem Stahlseil und/oder einer Stange.

Die Verankerungsverdickungen der Verbindungseinrichtung weisen vorteilhafterweise jeweils einen im Querschnitt zylinderförmigen Abschnitt und einen daran angeschlossenen kegelförmigen Abschnitt auf, dessen kleinster Querschnittsdurchmesser im wesentlichen der Querschnittsdicke der wenigstens in diesem Bereich stangenförmig ausgebildeten Verbindungseinrichtung entspricht.

Um zu gewährleisten, daß bei einem mit zwei voneinander beabstandeten Stegen ausgebildeten Schlittenkörper im Eingriffszustand beide jeweils mit dem Steg in Eingriff stehenden Verankerungsverdickungen in den Durchgangsbohrungen gehalten werden und in radialer Richtung nicht entweichen könen, entspricht der Abstand zweier benachbarter Verdickungseinrichtungen im wesentlichen dem Abstand beider Stege des Schlittenkörpers.

Die Erfindung wird nun unter Bezugnahme auf die nachfolgenden schematischen Zeichnungen anhand eines Ausführungsbeispieles beschrieben.

Darin zeigen:
Fig. 1 eine Draufsicht auf die Spanneinrichtung der Vorrichtung,
Fig. 2 eine Seitenansicht auf die in Fig. 1 dargestellte Spanneinrichtung,
Fig. 3 eine Draufsicht auf die Verbindungseinrichtung der Vorrichtung, wobei die die Figuren 1, 2 und 3 verbindende gestrichelte Linie symbolisch den Eingriff der Verbindung zwischen der die Vorrichtung bildenden Spanneinrichtung und Verbindungseinrichtung darstellt,
Fig. 4 a eine Ansicht der Spanneinrichtung von unten (Fig. 1) in vergrößertem Maßstab,

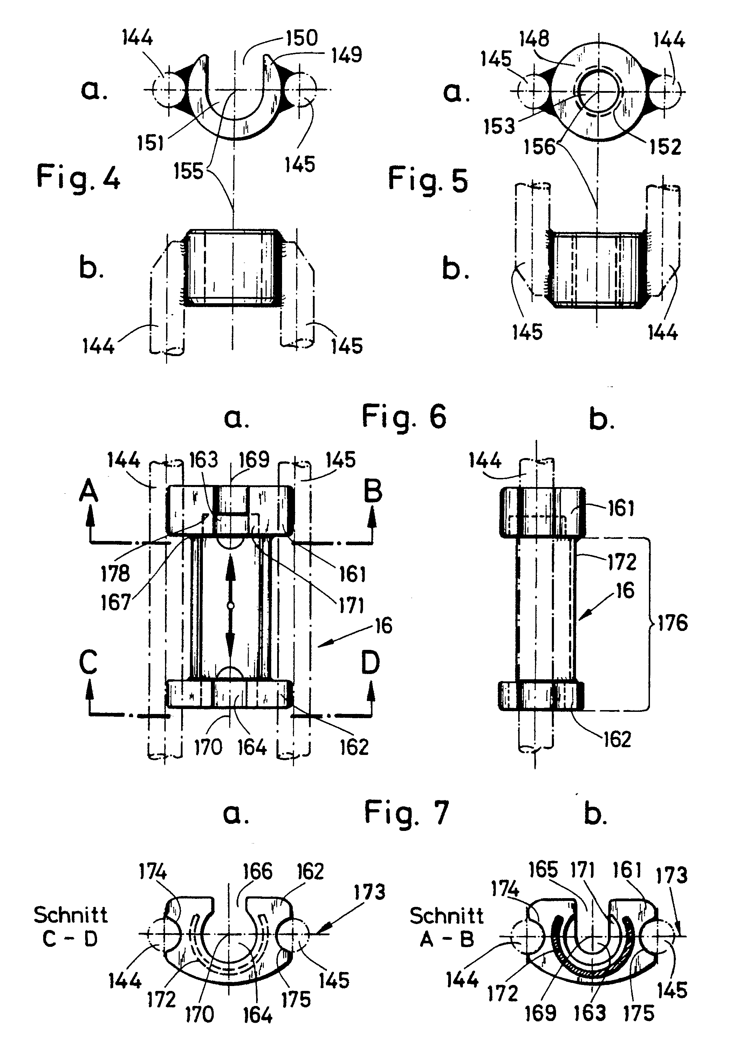

Fig. 4 b eine Draufsicht auf die in Fig. 4 a dargestellte Spanneinrichtung im Ausschnitt,

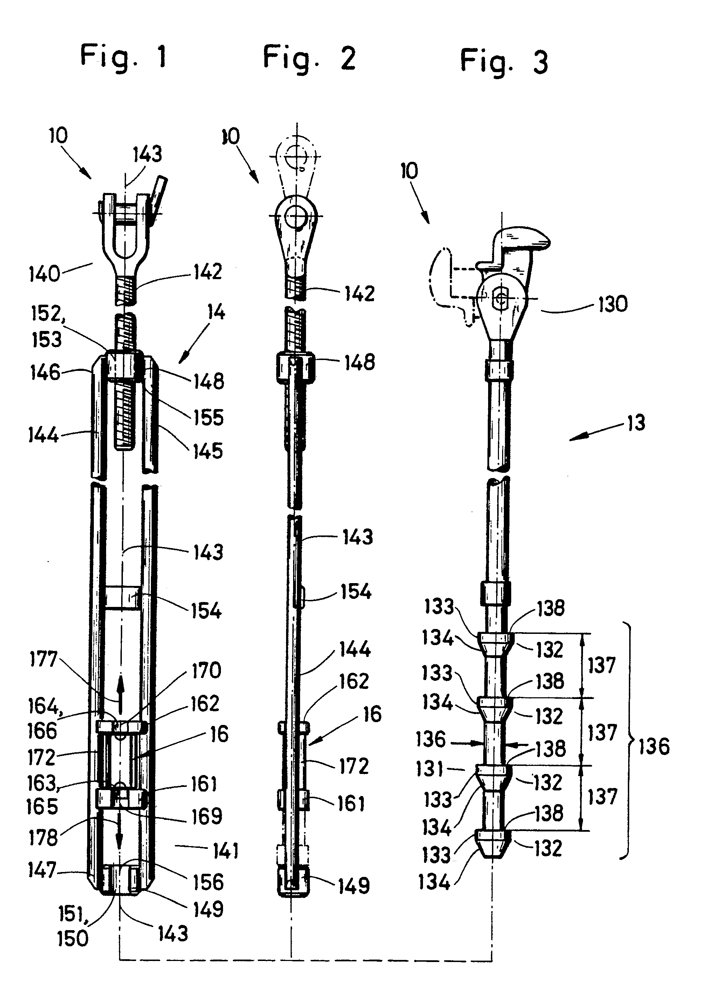

Fig. 5 a eine Ansicht auf die Spanneinrichtung von oben (Fig. 1, unter Weglassung der Gewindespindel) in vergrößertem Maßstab,
Fig. 5 b eine Draufsicht auf die in Fig. 5 a dargestellte Spanneinrichtung im Ausschnitt,
Fig. 6 a eine Draufsicht auf den Schlittenkörper unter teilweiser Darstellung der den Schlittenkörper aufnehmenden Spanneinrichtung,
Fig. 6 b eine Seitenansicht auf die Darstellung von Fig. 5 a,
Fig. 7 a einen Schnitt entlang der Linie C-D von Fig. 6 a,
Fig. 7 b einen Schnitt entlang der Linie A-B von Fig. 6 a und

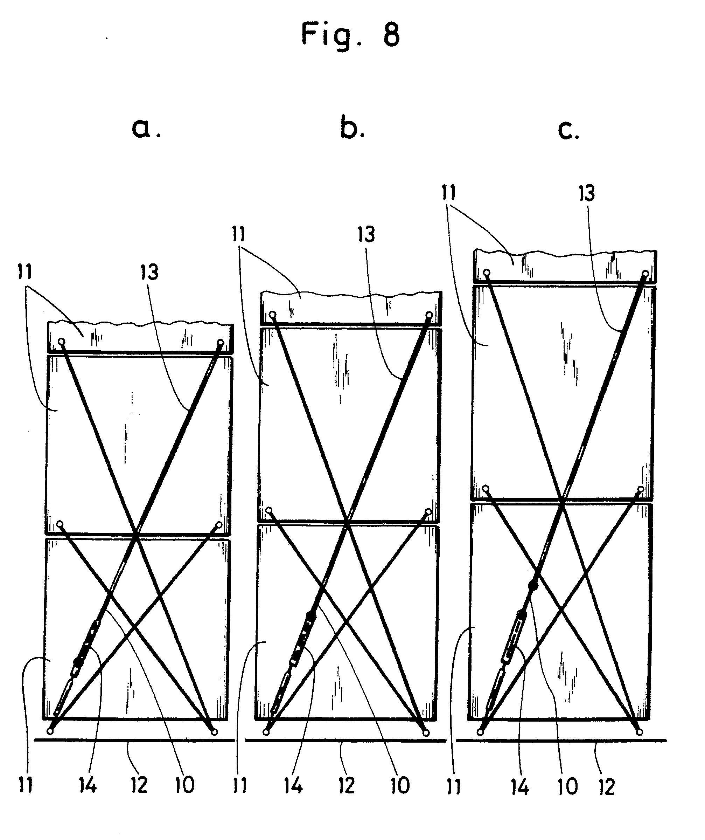

Fig. 8 a - c verschiedene Möglichkeiten der Anbringung der Vorrichtung aus Verbindungseinrichtung und Spanneinrichtung zum Sichern von Containern unterschiedlicher Größe untereinander und in bezug auf das Deck eines Schiffes.

Die Vorrichtung 10 zum Befestigen von Transportbehältern, im folgenden Container genannt, auf Transportfahrzeugen 12, umfaßt im wesentlichen eine Spanneinrichtung, vgl. Fig. 1 und eine Verbindungseinrichtung, vgl. Fig. 3.

Die Verbindungseinrichtung weist ein erstes Ende 130 und ein zweites Ende 131 auf und besteht im wesentlichen aus einem distanzüberbrükkenden stangen-, seil- oder kettenförmigen Teil oder aus Kombinationen davon. Der Bereich 136 der Verbindungseinrichtung 13, d. h. das Teil, das zum zweiten Ende 131 hin gerichtet ist, besteht aus einem stangenförmigen Teil, auf dem geeignet voneinander beabstandet Verankerungsverdickungen 132 aufgebracht bzw. befestigt sind. Alle der dort angeordneten Verankerungsverdickungen 132 können größenmäßig beliebig aber untereinadner gleich gewählt werden. Die Verankerungsverdikkungen 132 weisen einen im Querschnitt zylinderförmigen Abschnitt 133 und einen daran angeschlossenen kegelförmigen Abschnitt 134 auf. Der kleinste Querschnittsdurchmesser des kegelförmigen Abschnitts 134 entspricht im wesentlichen der Querschnittsdicke 135 der wenigstens in diesem Bereich 136, wie erwähnt, stangenförmig ausgebildeten Verbindungseinrichtung 13. Der Abstand 137 zweier benachbarter Verankerungsverdickungen 132 entspricht dem Abstand 176 der beiden Stege 161, 162 des im Zusammenhang mit der Beschreibung der Spanneinrichtung 14 beschriebenen Schlittenkörpers 15. Die Verbindungseinrichtung, vgl. Fig. 7, ist bei unterschiedlichem Eingriff der dort ausgebildeten Verankerungsverdickungen 132 mit der Verbindungseinrichtung geeignet, unterschiedliche Distanzen zwischen einer Befestigungseinrichtung an Deck eines Transportfahrzeuges 12 und den Eckbeschlägen eines Containers zu überbrücken.

Die Spanneinrichtung 14 weist ein erstes Ende 140 und ein zweites Ende 141 auf und besteht im wesentlichen aus zwei gleich langen, parallel voneinander beabstandeten Stangen 144, 145, deren jeweils erste und zweite Enden 146, 147 über jeweils ein erstes Abschlußelement 148 bzw. ein zweites Abschlußelement 149 miteinander verbunden sind, vgl. Fig. 4 und 5.

Das Abschlußelement 148 weist ein Durchgangsloch 153 auf, das mit einem Innengewinde 152 versehen ist und verbindet die beiden ersten Enden 146 der Stangen 144, 145. Das Durchgangsloch 151 mit seinem Innengewinde 152 dient zur Aufnahme einer Gewindespindel 142, die an ihrem dem eigentlichen Gewindeteil abgewandten Ende eine Befestigungseinrichtung aufweist, mit der die Spanneinrichtung 14 beispielsweise an Deck eines Transportfahrzeugs 12 auf geeignete und bekannte Weise befestigt werden kann.

Am zweiten Ende 147 werden die beiden Stangen 144, 145 durch das zweite Abschlußelement 149 verbunden, das ein Durchgangsloch 151 mit einer radialen Öffnung 150 aufweist, vgl. Fig. 4. Beide Stangen 144, 145 sind zwischen ihrem ersten und zweiten Ende 140, 141 über ein Zwischenelement 154 verbunden, um sie fortwährend auf gleichem Abstand zu halten. Es können auch mehrere Zwischenelemente zwischen den beiden Stangen 144, 145 vorgesehen sein. Die Achse der Spanneinrichtung 143 entspricht im wesentlichen der Achse 155 des ersten Abschlußelements 148 und der Achse 156 des zweiten Abschlußelements 149.

Die Stangen 144, 145 bilden Führungen für einen Schlittenkörper 16, der aus zwei im wesentlichen senkrecht dazu bzw. zur Achse 143 der Spanneinrichtung 14 ausgebildete Stege 161, 162 umfaßt. Die beiden Stege 161, 162 sind durch ein im wesentlichen im Querschnitt U-förmig ausgebildetes und somit einseitig von oben offenes Abstandselement 172 miteinander verbunden. In den beiden Stegen 161, 162 sind im wesentlichen rechtwinklig zu ihren verlaufende Durchgangslöcher 163, 164 angeordnet, die jeweils eine radiale Öffnung 165, 166 aufweisen, vgl. Fig. 6. Die lichte Weite der radialen Öffnung 165, 166 ist geringfügig größer als die Querschnittsdicke 135 der Verbindungseinrichtung 13 im Bereich 136 der Verankerungsverdickungen 132. Das Durchgangsloch 163 des ersten Steges 161 weist an seiner zur Gewindespindel 142 abgewandten Seite 167 ein zur Durchgangslochachse 169 im wesentlichen axiales Senkloch 171 auf. Der Durchmesser des axialen Senklochs 171 ist geringfügig größer als der Durchmesser des zylinderförmigen Abschnitts 133 der Verankerungsverdickung 132, so daß die Verankerungsverdickung 132 im axialen Senkloch 171 aufgenommen werden kann. Der Abstand 176 zwischen dem ersten Steg 161 und dem zweiten Steg 172 entspricht im wesentlichen dem Abstand 137 zweier benachbarter Verankerungsverdickungen 132. Beide Stege 161, 162 weisen im wesentlichen parallel zur Durchgangslochachse 169, 170 und in der gleichen Achsebene 173 liegend zwei gegenüberliegende Führungsöffnungen 174, 175 auf, vgl. Fig. 6, die jeweils die angrenzenden Stangen 144, 145 ergreifen. Somit ist der Schlittenkörper 16 in Richtung der Pfeile 177, 178 hin und her verschiebbar.

Die Vorrichtung 10 wird folgendermaßen in Betrieb genommen. Zum Sichern der Container 11 wird zunächst die Spanneinrichtung 14 mit ihrem ersten Ende 140, an dem die Gewindespindel 142 angeordnet ist, über das dort ausgebildete bekannte Befestigungselement mit dem Transportfahrzeug 12, beispielsweise an an Deck eines Schiffes ausgebildeten Befestigungsaugen befestigt. Die Verbindungseinrichtung 13 wird dann mit ihrem ersten Ende 30, das ein bekanntes Verbindungselement zur Befestigung in den genormten Ecken eines Containereckbeschlages aufweist, befestigt. Dann wird das zweite Ende 131 der Verbindungseinrichtung, das ist im wesentlichen der Bereich 136 der Verbindungseinrichtung 13, der die Verankerungsverdickungen 132 aufweist, derart mit der Spanneinrichtung 14 verbunden, das der stangenförmige Bereich der Verbindungseinrichtung 13 durch die radialen Öffnungen 165, 166 des Schlittenkörpers 16 gedrückt bzw. eingeführt wird, nachdem der gemäß der Richtung der Pfeile 177, 178 leicht hin und her bewegbare Schlittenkörper 16 auf Höhe der ausgewählten Verankerungsverdickungen 132 geschoben worden ist. Da, wie erwähnt, die Querschnittsdicke 135 des stangenförmig ausgebildeten Bereichs der Verbindungseinrichtung 13 geringfügig kleiner als die lichte Weite der radialen Öffnungen 165, 166 ist, kann der stangenförmige Bereich der Verbindungseinrichtung 13 leicht durch die radialen Öffnungen 165, 166 in die Durchgangslöcher 163, 164 radial verschoben werden. Entspricht die Achse der Verbindungseinrichtung 13 in etwa der Achse 143 der Spanneinrichtung 14 wird der Schlittenkörper 16 losgelassen oder durch die Bedienungsperson geringfügig in Richtung des Pfeiles 177 verschoben, so daß die beiden geeignet ausgewählten Verankerungsverdickungen 132, die in den Durchgangslöchern 163, 164 zu Liegen kommen sollen, auf den zylindrischen Abschnitt 133 der Verankerungsverdickungen 132 geschoben werden, bis die vom ersten Steg 161 aufgenommenen Verankerungsverdickung mit ihrem Rücken 138 am Boden des Senkloches 179 anliegt. Die Verbindungseinrichtung 13 ist nun in einer Art losen Verbindung mit der Spanneinrichtung 14 verbunden, da die Verankerungsverdickungen 132 aus den radialen Öffnungen 165, 166 der Durchgangslöcher 163, 164 der Stege 161, 162 nicht in radialer Richtung herausgelangen können.

Die Bedienungsperson hat nun beide Hände frei und kann durch Drehen der Spanneinrichtung 14 bewirken, daß der Schlittenkörper 16 sich in Richtung des Pfeiles 178 bewegt, bis der erste Steg 161 am zweiten Abschlußelement anliegt. Da eine Weiterbewegung des Schlittenkörpers 16 in Richtung des Pfeiles 178 dann nicht mehr möglich ist, wird insgesamt nachfolgend die Länge der aus Verbindungseinrichtung 13 und Spanneinrichtung 14 bestehenden Vorrichtung 10 durch Drehen der Spanneinrichtung 14 relativ zur festen Gewindespindel verringert, so daß die Container 11 relativ zu einem Transportfahrzeug 12 sicher befestigt werden können.

Bezugszeichenliste

10 Vorrichtung
11 Transportbehälter (Container)
13 Verbindungseinrichtung
130 erstes Ende
131 zweites Ende
132 Verankerungsverdickung
133 zylinderförmiger Abschnitt
134 kegelförmiger Abschnitt
135 Querschnittsdicke
136 Bereich
137 Abstand
138 Rücken
14 Spanneinrichtung
140 erstes Ende
141 zweites Ende
142 Gewindespindel (Spannschraube)
143 Achse der Spanneinrichtung
144 Stange
145 Stange
146 erstes Ende
147 zweites Ende
148 erstes Abschlußelement
149 zweites Abschlußelement
150 radiale Öffnung
151 Durchgangsloch
152 Gewinde
153 Durchgangsloch
154 Zwischenelement
155 Achse
156 Achse
16 Schlittenkörper
161 Steg (erster)
162 Steg (zweiter)
163 Durchgangsloch
164 Durchgangsloch
165 radiale Öffnung
166 radiale Öffnung
167 abgewandtes Ende des Steges
168 abgewandtes Ende des Steges
169 Durchgangslochachse
170 Durchgangslochachse
171 Senkloch
172 Abstandselement
173 Achsebene
174 Führungsöffnung
175 Führungsöffnung
176 Abstand
177 Pfeil
178 Pfeil
179 Boden

**Ansprüche**

1. Vorrichtung zum Sichern von Transportbehältern auf Transportfahrzeugen, insbesondere Schiffen, umfassend eine Verbindungseinrichtung, deren erstes Ende mit dem Transportbehälter verbindbar ist, und eine Spanneinrichtung, deren mit einer Gewindespindel längenverstellbares erstes Ende mit dem Tranportfahrzeug verbindbar ist, wobei das zweite Ende der Verbindungseinrichtung eine Mehrzahl von Verankerungsverdickungen aufweist, über die das zweite Ende der Spanneinrichtung mit der Verbindungseinrichtung wahlweise in geeignet gewählten Abstandsrastern verbindbar ist, dadurch gekennzeichnet, daß die Spanneinrichtung (14) einen Schlittenkörper (14) zur Aufnahme der Verankerungsverdickungen (132) aufweist, der im wesentlichen in axialer (143) Richtung der Spanneinrichtung frei bewegbar ist.

2. Vorrichtung nach Anspruch 1, dadurch gekennzeichnet, daß der Schlittenkörper (16) wenigstens einen klauenartig ausgebildeten Steg (161; 162) zum Eintritt und zur Aufnahme der Verankerungsverdickungen (132) aufweist.

3. Vorrichtung nach Anspruch 2, dadurch gekennzeichnet, daß der Steg (161; 162) ein radial offenes (165; 166) Durchgangsloch (163; 164) zum Eintritt und zur Aufnahme der Verbindungseinrichtung (13) aufweist.

4. Vorrichtung nach Anspruch 3, dadurch gekennzeichnet, daß das Durchgangsloch (163) des ersten Stegs (161) an seiner zur Gewindespindel (142) abgewandten Seite (167) ein zu seiner Lochachse (169, 170) im wesentlichen axiales Senkloch (171) aufweist.

5. Vorrichtung nach einem oder mehreren der Ansprüche 1 bis 4, dadurch gekennzeichnet, daß zwei voneinander beabstandete Stege (161, 162) über ein Abstandselement (172) miteinander verbunden sind.

6. Vorrichtung nach Anspruch 5, dadurch gekennzeichnet, daß das Abstandselement (172) im Querschnitt im wesentlichen U-förmig ausgebildet ist.

7. Vorrichtung nach einem oder mehreren der Ansprüche 1 bis 6, dadurch gekennzeichnet, daß der Steg (161, 162) im wesentlichen parallel zur Durchgangslochachse (169; 170) und in der gleichen Achsebene (173) zwei gegenüberliegende Führungsöffnungen (174; 175) aufweist.

8. Vorrichtung nach einem oder mehreren der Ansprüche 1 bis 7, dadurch gekennzeichnet, daß die Spanneinrichtung (14) durch zwei im wesentlichen parallele Stangen (144, 145) gebildet wird, die an ihrem ersten und zweiten Ende (146, 147) mit jeweils einem ersten und einem zweiten Abschlußelement (148, 149) versehen sind.

9. Vorrichtung nach Anspruch 8, dadurch gekennzeichnet, daß das zur Verankerungsverdickung (132) hin gerichtete zweite Abschlußelement (149) ein radial offenes (150) Durchgangsloch (151) zum Durchtritt der Verbindungseinrichtung (13) aufweist.

10. Vorrichtung nach einem oder beiden der Ansprüche 8 oder 9, dadurch gekennzeichnet, daß das zum Transportfahrzeug (12) hin gerichtete erste Abschlußelement (148) ein mit einem Gewinde (152) versehenes Durchgangsloch (153) zur Aufnahme der Gewindespindel (142) aufweist.

11. Vorrichtung nach einem oder beiden der Ansprüche 9 oder 10, dadurch gekennzeichnet, daß die Achsen (155, 156) der Durchgangslöcher (151, 153), die im wesentlichen die Achse (143) der Spanneinrichtung (14) bilden, mit den Durchgangslochachsen (169, 170) der Stege (161, 162) fluchten.

12. Vorrichtung nach einem oder mehreren der Ansprüche 8 bis 10, dadurch gekennzeichnet, daß zwischen dem ersten und dem zweiten Abschlußelement (148, 149) ein Zwischenelement (154) angeordnet ist, das die Stangen (144, 145) verbindet.

13. Vorrichtung nach einem oder mehreren der Ansprüche 1 bis 12, dadurch gekennzeichnet, daß die Verankerungsverdickungen (132) jeweils einen im Querschnitt zylinderförmigen Abschnitt (133) und einen daran angeschlossenen kegelförmigen Abschnitt (134) aufweisen, dessen kleinster Querschnittsdurchmesser im wesentlichen der Querschnittsdicke (135) der wenigstens in diesem Bereich (136) stangenförmig ausgebildeten Verbindungseinrichtung (13) entspricht.

14. Vorrichtung nach einem oder mehreren der Ansprüche 2 bis 13, dadurch gekennzeichnet, daß der Abstand (137) zweier benachbarter Verankerungsverdickungen (132) im wesentlichen dem Abstand (176) der beiden Stege (161, 162) des Schlittenkörpers (16) entspricht.

# Fig. 1   Fig. 2   Fig. 3

Fig. 4

Fig. 5

Fig. 6

Fig. 7

Schnitt C – D

Schnitt A – B

# Fig. 8

a.

b.

c.

## Europäisches Patentamt

# EUROPÄISCHER RECHERCHENBERICHT

Nummer der Anmeldung

## EP 90 11 8159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-B-1 165 355 (AEROQUIP)<br>* Spalte 2, Zeilen 28-49 *<br>- - - | 1-14 | B 63 B 25/28<br>F 16 G 11/12 |
| D,Y | DE-U-8 807 164 (CONVER-OSR)<br>* Figuren 1-8 *<br>- - - | 1-14 | |
| A | WO-A-8 304 231 (BÖCK)<br>* Figuren 1-12 *<br>- - - - - | 1-14 | |

| RECHERCHIERTE SACHGEBIETE (Int. Cl.5) |
|---|
| B 63 B<br>F 16 B<br>F 16 G<br>F 16 L |

Der vorliegende Recherchenbericht wurde für alle Patentansprüche erstellt

| Recherchenort | Abschlußdatum der Recherche | Prüfer |
|---|---|---|
| Den Haag | 18 Dezember 90 | HUNT A.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument